# EUROPEAN PATENT APPLICATION

(11) **EP 4 793 767 A1**
(43) Date of publication of application: **19.08.2026**
(21) Application number: 26156809.1
(22) Date of filing: 06.02.2026
(51) Int. Cl.: G06F 9/445, G06F 8/61

(54) **APPLICATION SETTING SYSTEM AND APPLICATION SETTING METHOD**

(30) Priority: 18.02.2025 JP 2025024333
(71) Applicant: KYOCERA Document Solutions Inc., Osaka-shi, Osaka 540-8585 (JP)
(72) Inventor: MATSUMOTO, Atsushi, Osaka-shi, 540-8585 (JP)
(74) Representative: IPAZ

(57) **Abstract**

Various initial settings are performed appropriately and easily for a user during installation or initial setup of an application. A setting value management unit of a management server sets one or more setting values for one or more setting items of a client application. A setting key management unit of the management server generates and manages a setting key linked to a group of the one or more setting values set for the one or more setting items. A setting key supply unit of the management server supplies a download URL for an installer of the client application and the setting key to an electronic device on which the client application is installed. A setting value supply unit of the management server receives the setting key from the electronic device and transmits the group of the one or more setting values set for the one or more setting items linked to the setting key to the electronic device.

## Description

### Incorporation by Reference

This application claims the benefit of Japanese Priority Patent Application JP 2025-024333 filed on February 18, 2025, the entire contents of which are incorporated herein by reference.

### Field

The present disclosure relates to an application setting system for setting an application on an electronic device, and an application setting method.

### Background

There is a common case where a server provides a client application to be installed on a user's electronic device (such as a personal computer).

### Summary

Various initial settings are often performed during installation or initial setup of a client application. However, depending on a literacy level of a user, the user may not know appropriate setting values for own environment, and the application may not always be used based on appropriate settings.

In view of the above circumstances, an object of the present disclosure is to enable various initial settings during installation or initial setup of an application to be performed appropriately and easily for the user.

An application setting system according to one embodiment of the present disclosure includes a management server having a setting value management unit, a setting key management unit, a setting key supply unit, and a setting value supply unit, and
an electronic device having a setting start unit and a setting execution unit,
in which the setting value management unit of the management server sets one or more setting values for one or more setting items of a client application,
in which the setting key management unit of the management server generates and manages a setting key linked to a group of the one or more setting values set for the one or more setting items,
in which the setting key supply unit of the management server supplies a download URL for an installer of the client application and the setting key to the electronic device on which the client application is installed,
in which the setting start unit of the electronic device causes the electronic device to display a setting key input screen, acquires the setting key input on the setting key input screen, and transmits the setting key to the management server, when the electronic device accesses the download URL to download the installer and starts installation or setup of the client application,
in which the setting value supply unit of the management server receives the setting key from the electronic device and transmits the group of the one or more setting values set for the one or more setting items linked to the setting key to the electronic device,
in which the setting execution unit of the electronic device receives the group of the one or more setting values set for the one or more setting items linked to the setting key from the management server, sets the one or more setting values linked to the setting key to the one or more setting items, and installs or sets up the client application on the electronic device.

An application setting method executed by an application setting system according to one embodiment of the present disclosure includes a management server having a setting value management unit, a setting key management unit, a setting key supply unit, and a setting value supply unit, and
an electronic device having a setting start unit and a setting execution unit,
in which the setting value management unit of the management server sets one or more setting values for one or more setting items of a client application,
in which the setting key management unit of the management server generates and manages a setting key linked to a group of the one or more setting values set for the one or more setting items,
in which the setting key supply unit of the management server supplies a download URL for an installer of the client application and the setting key to the electronic device on which the client application is installed,
in which the setting start unit of the electronic device causes the electronic device to display a setting key input screen, acquires the setting key input on the setting key input screen, and transmits the setting key to the management server, when the electronic device accesses the download URL to download the installer and starts installation or setup of the client application,
in which the setting value supply unit of the management server receives the setting key from the electronic device and transmits the group of the one or more setting values set for the one or more setting items linked to the setting key to the electronic device,
in which the setting execution unit of the electronic device receives the group of the one or more setting values set for the one or more setting items linked to the setting key from the management server, sets the one or more setting values linked to the setting key to the one or more setting items, and installs or sets up the client application on the electronic device.

These and other objects, features, and advantages of the present disclosure will become more apparent in light of the following detailed description of preferred embodiments thereof, as illustrated in the accompanying drawings.

### Brief Description of Figures

Fig. 1 shows an application setting system according to an embodiment of the present disclosure;
Fig. 2 shows a hardware configuration of a management server;
Fig. 3 shows a hardware configuration of an electronic device;
Fig. 4 shows a functional configuration of the application setting system;
Fig. 5 shows an operation flow of the application setting system;
Fig. 6 shows an example of a setting value input screen;
Fig. 7 shows an example of an email body;
Fig. 8 shows an example of a setting key input screen; and
Fig. 9 shows an example of a setting value confirmation screen.

### Detailed Description

Embodiments of the present disclosure will now be described with reference to accompanying drawings.

### 1. Overview of application setting system

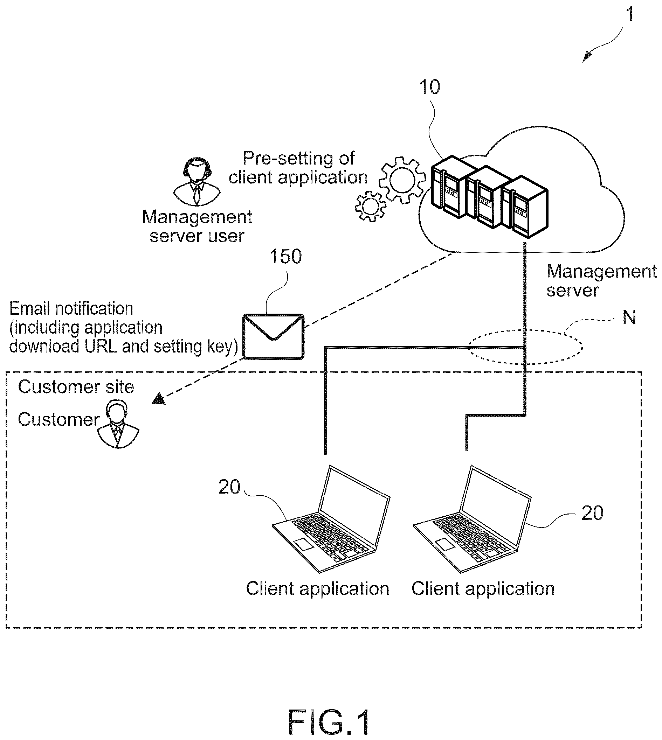

Fig. 1 shows an application setting system according to an embodiment of the present disclosure.

An application setting system 1 includes a management server 10 and an electronic device 20. The management server 10 and the electronic device 20 are connected via a network N, such as the Internet, enabling communication.

The electronic device 20 is a terminal device, such as a personal computer or tablet computer, used by a customer (client) of an application provider. An application (client application) is installed on the electronic device 20.

The management server 10 is a server device of the application provider installed on the electronic device 20. To the management server 10, a customer-specific setting value for the application is input by a management server user (an employee of the application provider). The management server 10 transmits a setting key corresponding to the setting value and an application download URL to the electronic device 20, for example, via an email 150.

### 2. Hardware configuration of management server

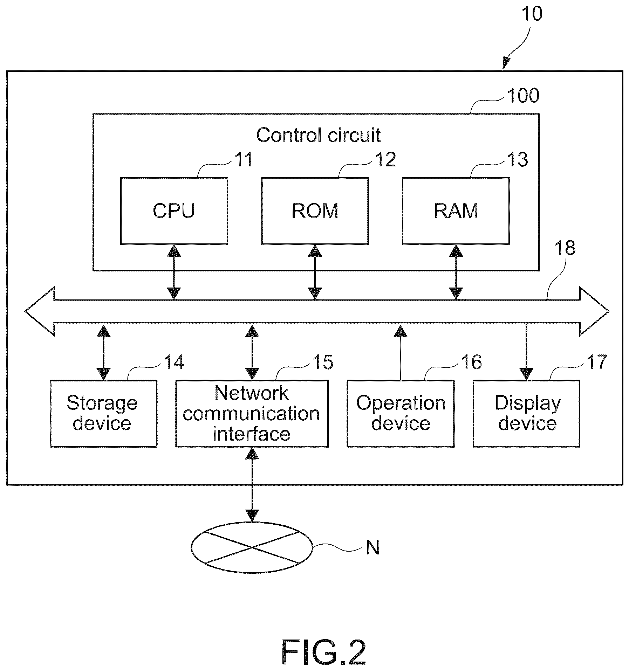

Fig. 2 shows a hardware configuration of the management server.

The management server 10 includes a CPU 11, a ROM 12, a RAM 13, a large-capacity non-volatile storage device 14 (such as an HDD or an SSD), a network communication interface 15, an operation device 16, a display device 17, and a bus 18 interconnecting these components.

The CPU 11, the ROM 12, and the RAM 13 constitute a control circuit 100. The CPU 11 loads and executes an information processing program stored in the ROM 12 into the RAM 13. The ROM 12 permanently stores programs and data executed by the CPU 11. The ROM 12 is an example of a non-transitory computer-readable recording medium.

### 3. Hardware configuration of electronic device

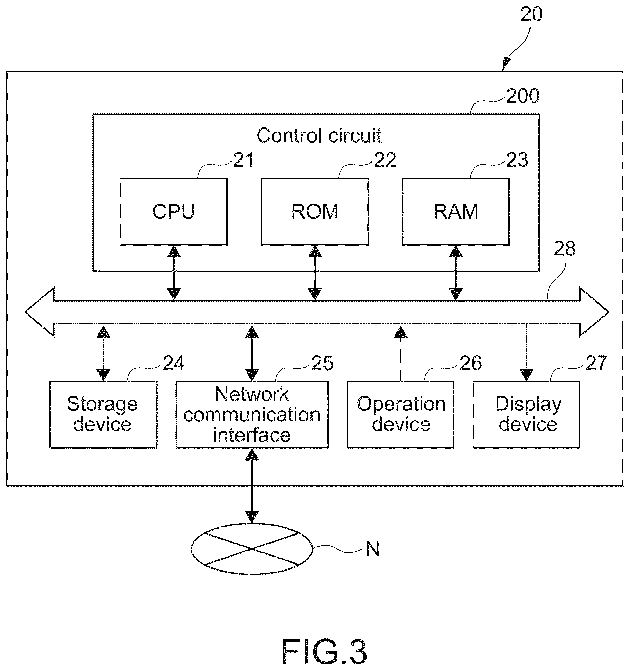

Fig. 3 shows a hardware configuration of the electronic device.

The electronic device 20 includes a CPU 21, a ROM 22, a RAM 23, a large-capacity non-volatile storage device 24 (such as an HDD or an SSD), a network communication interface 25, an operation device 26, a display device 27, and a bus 28 interconnecting these components.

The CPU 21, the ROM 22, and the RAM 23 constitute a control circuit 200. The CPU 21 loads and executes an information processing program stored in the ROM 22 into the RAM 23. The ROM 22 permanently stores programs and data executed by the CPU 21. The ROM 22 is an example of a non-transitory computer-readable recording medium.

### 4. Functional configuration of application setting system

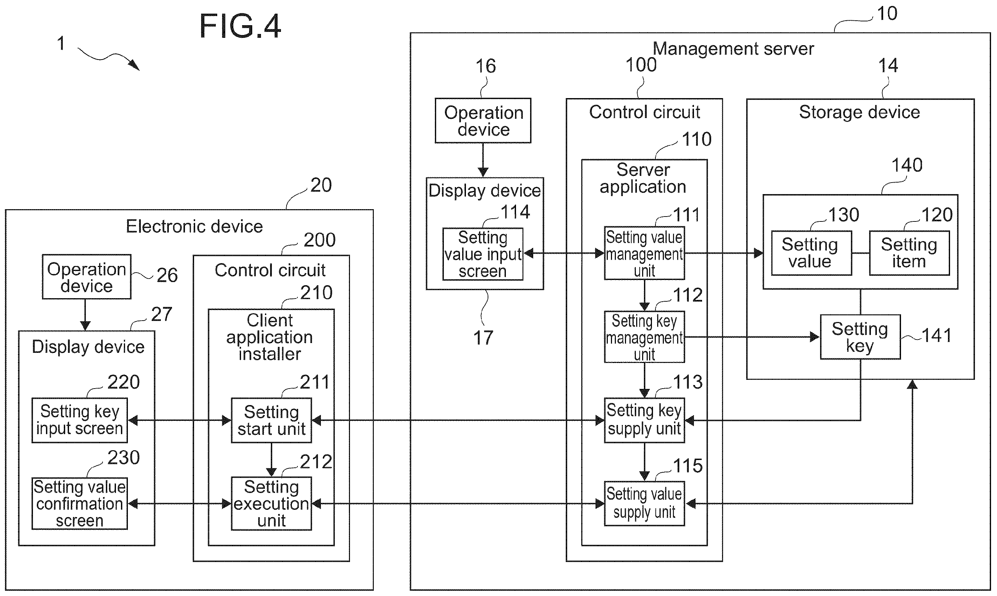

Fig. 4 shows a functional configuration of the application setting system.

The control circuit 100 of the management server 10 operates as a setting value management unit 111, a setting key management unit 112, a setting key supply unit 113, and a setting value supply unit 115 by executing a server application 110.

The control circuit 200 of the electronic device 20 operates as a setting start unit 211 and a setting execution unit 212 by executing a client application installer 210.

### 5. Operation flow of application setting system

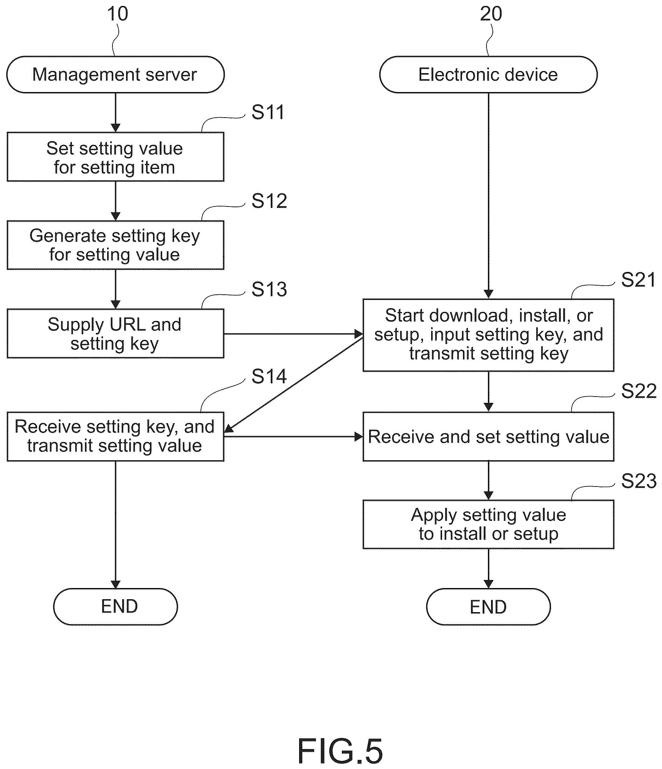

Fig. 5 shows an operation flow of the application setting system.

The setting value management unit 111 of the management server 10 sets one or more setting values 130 (multiple in this example) that correspond one-to-one to one or more setting items 120 (multiple in this example) of the client application. The setting value management unit 111 stores the one or more setting values 130 set for the one or more setting items 120 of the client application in the storage device 14 (Step S11).

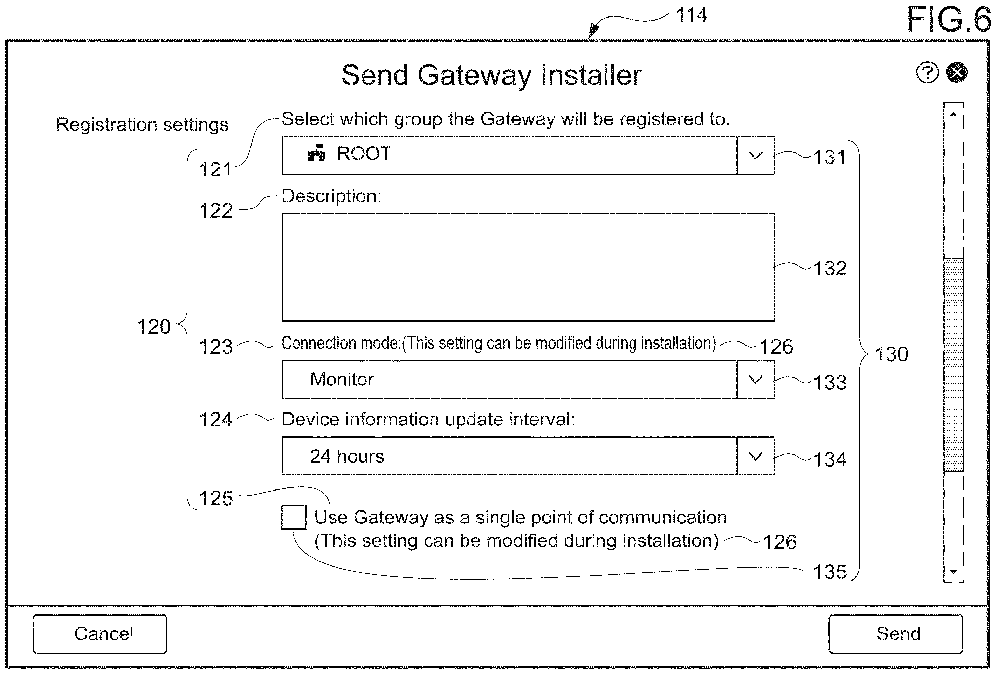

Fig. 6 shows an example of a setting value input screen.

The setting value input screen 114 is a screen for the setting items required during installation or initial setup of the client application on the management server 10. The setting value input screen 114 in this example is merely one example and is the setting value input screen for the client application named "Gateway". The setting value input screen 114 allows input of the setting values 130 (131-135) for the one or more (multiple in this example) setting items 120 (121-125).

The setting item 121 sets a group of the electronic device 20 registering the client application, with a setting value 131 selected via a pull-down menu. The setting item 122 sets a description for the customer to identify the client application, and any text can be input as a setting value 132. The setting item 123 sets a mode (e.g., always, single-use) in which the client electronic device 20 connects to the management server 10 via a network path, and is selected via a pull-down menu. The setting item 124 specifies an interval for acquiring information about the device (e.g., an imaging device) managed by the electronic device 20 where the client application is installed. A setting value 134 (time interval) is selected via a pull-down menu. The setting item 125 indicates whether the electronic device 20 installing the client application "Gateway" is used as a single point of network communication. The setting value 135 is selected as on or off.

Among the setting items 121 to 125, the setting items 123 and 125 are specific setting items related to the network path of the client application. These specific setting items 123 and 125 can be edited during the installation or initial setup of the client application on the electronic device 20. On the other hand, the setting items 121, 122, and 124, which do not relate to the network path, cannot be edited during the installation or initial setup of the client application on electronic device 20. Pre-setting each setting item on the management server 10 can reduce a workload for the customer installing the client application, thereby lowering a barrier to introducing the client application.

The setting key management unit 112 of the management server 10 generates and manages a setting key 141 uniquely linked with a group 140 of the one or more setting values 130 set for the one or more setting items 120. The setting key management unit 112 uniquely links the setting key 141 with the group 140 of the one or more setting values 130 set for the one or more setting items 120 and stores it in the storage device 14 (Step S12).

The setting key supply unit 113 of the management server 10 supplies (e.g., transmits via email 150) the download URL for the client application installer and the setting key 141 to the electronic device where the client application is to be installed (Step S13).

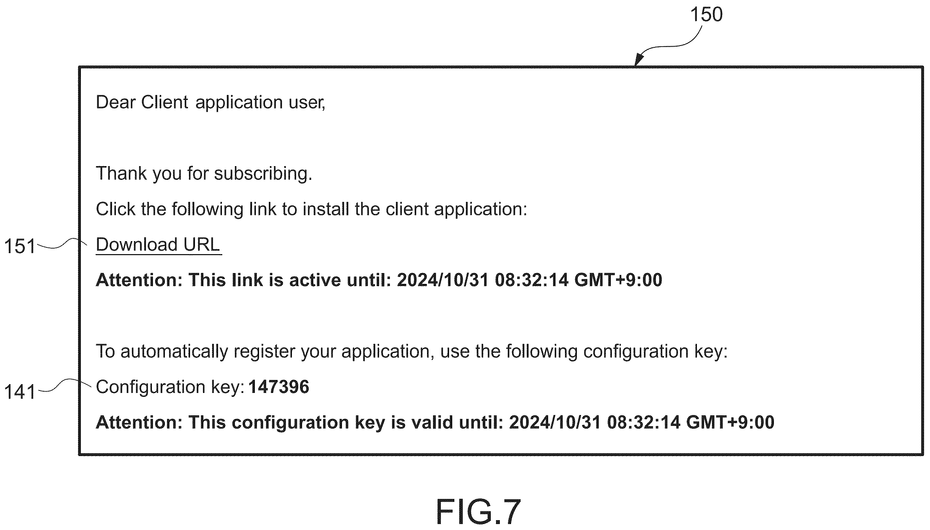

Fig. 7 shows an example of an email body.

The email body 150 describes a download URL 151 for the client application installer and the setting key 141.

In the electronic device 20, the download URL 151 of the email 150 is operated (clicked, tapped, etc.). The electronic device 20 accesses the download URL 151 to download the client application installer 210 and starts the installation or setup of the client application. Then, the setting start unit 211 of the electronic device 20 displays a setting key input screen 220 on the electronic device 20. The setting start unit 211 acquires the setting key 141 input on the setting key input screen 220 and transmits the setting key 141 to the management server 10 (Step S21).

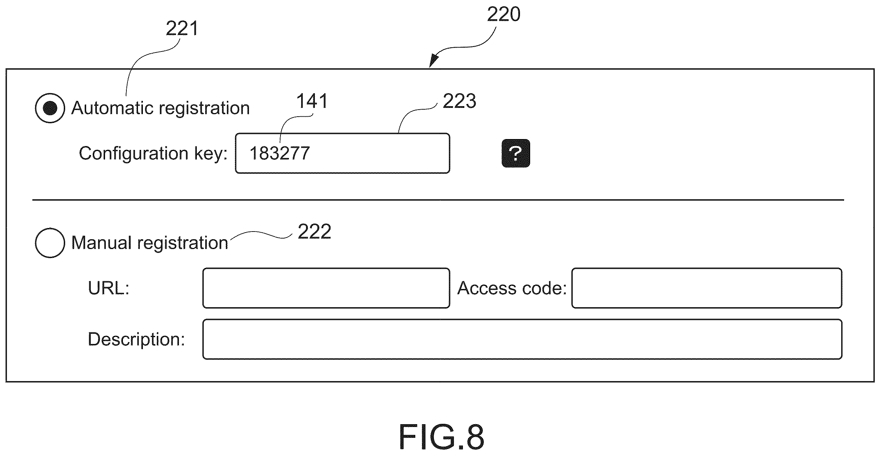

Fig. 8 shows an example of the setting key input screen.

The setting key input screen 220 allows selection between automatic registration 221 or manual registration 222. If the automatic registration 221 is selected, the setting key 141 described in the email 150 can be input into the setting key input area 223.

The setting value supply unit 115 of the management server 10 receives the setting key 141 from the electronic device 20 and transmits the group 140 of the one or more setting values 130 set for the one or more setting items 120 linked to the setting key 141 to the electronic device 20 (Step S14).

The setting execution unit 212 of the electronic device 20 receives the group 140 of the one or more setting values 130 set for the one or more setting items 120 linked to the setting key 141 from the management server 10. The setting execution unit 212 determines whether the one or more setting items 120 are the specific setting items 123, 125 that display the setting values 130 as initial values that can be edited, or the setting items 121, 122, 124 other than the specific setting items 123, 125 that set the setting values 130. The setting execution unit 212 possesses information in advance identifying which setting items 120 are the specific setting items 123, 125 (in this example, the setting items 123, 125 concerning the network path of the client application).

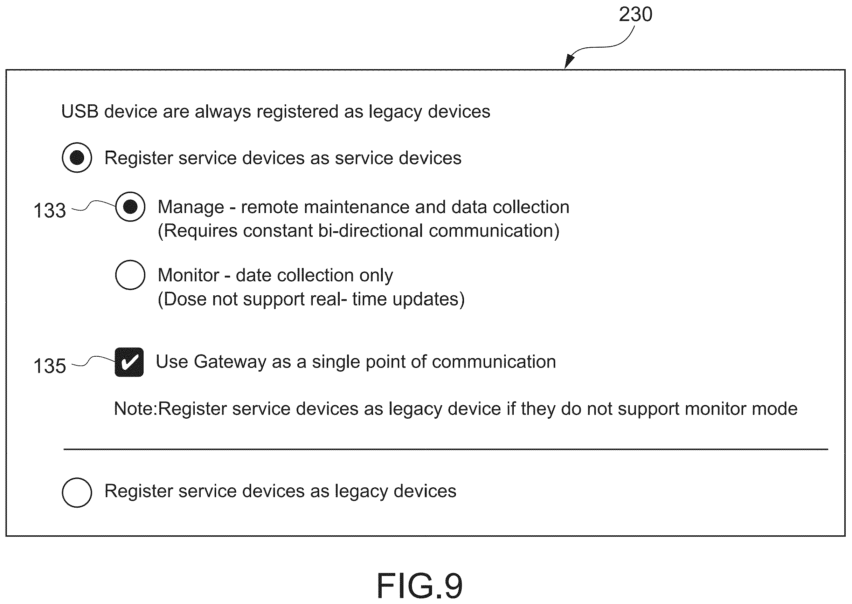

Fig. 9 shows an example of a setting value confirmation screen.

The setting execution unit 212 sets the one or more setting values 131, 132, 134 linked to the setting key 141 that cannot be edited for the setting items 121, 122, 124 other than the specific setting items 123, 125 (may not be displayed on the setting value confirmation screen 230). Meanwhile, the setting execution unit 212 displays the setting values 130 for the specific setting items 123, 125 that can be edited as initial values for the specific setting items 133, 135 on the setting value confirmation screen 230, and, when the setting values 130 for the specific setting items 123, 125 are confirmed in the electronic device 20, sets the confirmed setting values 130 for the specific setting items 123, 125 (Step S22). That is, for the setting items related to the network path, since they are the setting items related to a customer environment, they are not automatically applied to the client application, instead, pre-set setting values 130 are displayed as the initial values. Fig. 9 shows the case where a target setting is pre-set as ON on the management server 10.

The setting execution unit 212 applies all setting values 130 to all setting items 120 and installs or sets up the client application on the electronic device 20 (Step S23).

### 6. Conclusion

According to this embodiment, by using the setting key 141 within the email body 150 during the installation or initial setup of the client application, the setting values 130 pre-set by the management server 10 can be utilized, reducing a user operation.

According to this embodiment, the server application 110 pre-sets the settings requested by the customer and provides the customer with the setting key 141 corresponding to a pre-set. When the customer uses the setting key 141, the pre-set setting items can be automatically applied during the installation or initial setup of the client application, or display them as the initial values. This lowers the barrier of the installation or initial setup of the client application and promotes a use of the client application based on appropriate setting values.

According to this embodiment, various initial settings can be performed appropriately and easily for the user during the installation or initial setup of the application.

Various embodiments and modifications of the present technology have been described above. However, the present technology is not limited to the above-described embodiments, and various modifications can be made within the scope that does not depart from the essence of the present technology.

It should be understood by those skilled in the art that various modifications, combinations, subcombinations and alterations may occur depending on design requirements and other factors insofar as they are within the scope of the appended claims or the equivalents thereof.

## Claims

1. An application setting system (1), comprising:
a management server (10) having a setting value management unit (111), a setting key management unit (112), a setting key supply unit (113), and a setting value supply unit (115); and
an electronic device (20) having a setting start unit (211) and a setting execution unit (212),
wherein the setting value management unit (111) of the management server (10) sets one or more setting values for one or more setting items of a client application,
wherein the setting key management unit (112) of the management server (10) generates and manages a setting key linked to a group of the one or more setting values set for the one or more setting items,
wherein the setting key supply unit (113) of the management server (10) supplies a download URL for an installer of the client application and the setting key to the electronic device (20) on which the client application is installed,
wherein the setting start unit (211) of the electronic device (20) causes the electronic device (20) to display a setting key input screen, acquires the setting key input on the setting key input screen, and transmits the setting key to the management server (10), when the electronic device (20) accesses the download URL to download the installer and starts installation or setup of the client application,
wherein the setting value supply unit (115) of the management server (10) receives the setting key from the electronic device (20) and transmits the group of the one or more setting values set for the one or more setting items linked to the setting key to the electronic device (20),
wherein the setting execution unit (212) of the electronic device (20) receives the group of the one or more setting values set for the one or more setting items linked to the setting key from the management server (10), sets the one or more setting values linked to the setting key to the one or more setting items, and installs or sets up the client application on the electronic device (20).

2. The application setting system (1) according to claim 1, wherein the setting execution unit (212) of the electronic device (20) displays the setting values for specific setting items that can be edited as initial values of the specific setting items, when the setting values for the specific setting items are confirmed in the electronic device (20), sets the setting values confirmed for the specific setting items, and installs or sets up the client application on the electronic device (20).

3. The application setting system (1) according to claim 2, wherein the setting execution unit (212) of the electronic device (20) determines whether the one or more setting items are the specific setting items that display the setting values as initial values that can be edited, or the setting items other than the specific setting items that set the setting values.

4. The application setting system (1) according to claim 2 or 3, wherein the specific setting items are setting items related to a network path.

5. An application setting method executed by an application setting system (1), comprising:
a management server (10) having a setting value management unit (111), a setting key management unit (112), a setting key supply unit (113), and a setting value supply unit (115); and
an electronic device (20) having a setting start unit (211) and a setting execution unit (212),
wherein the setting value management unit (111) of the management server (10) sets one or more setting values for one or more setting items of a client application,
wherein the setting key management unit (112) of the management server (10) generates and manages a setting key linked to a group of the one or more setting values set for the one or more setting items,
wherein the setting key supply unit (113) of the management server (10) supplies a download URL for an installer of the client application and the setting key to the electronic device (20) on which the client application is installed,
wherein the setting start unit (211) of the electronic device (20) causes the electronic device (20) to display a setting key input screen, acquires the setting key input on the setting key input screen, and transmits the setting key to the management server (10), when the electronic device (20) accesses the download URL to download the installer and starts installation or setup of the client application,
wherein the setting value supply unit (115) of the management server (10) receives the setting key from the electronic device (20) and transmits the group of the one or more setting values set for the one or more setting items linked to the setting key to the electronic device (20),
wherein the setting execution unit (212) of the electronic device (20) receives the group of the one or more setting values set for the one or more setting items linked to the setting key from the management server (10), sets the one or more setting values linked to the setting key to the one or more setting items, and installs or sets up the client application on the electronic device (20).
